**Europäisches Patentamt**

**European Patent Office**

**Office européen des brevets**

(19)

(11) Publication number : **0 327 173 B1**

# (12) EUROPEAN PATENT SPECIFICATION

(45) Date of publication of patent specification :
**15.04.92 Bulletin 92/16**

(51) Int. Cl.⁵ : **B60B 5/02,** B29D 31/00,
B29C 53/82

(21) Application number : **89200190.0**

(22) Date of filing : **27.01.89**

(54) Process for the manufacturing of a wheel of a laminate structure.

(30) Priority : **02.02.88 EP 88830036**

(43) Date of publication of application :
**09.08.89 Bulletin 89/32**

(45) Publication of the grant of the patent :
**15.04.92 Bulletin 92/16**

(84) Designated Contracting States :
**AT BE CH DE ES FR GB GR IT LI LU NL SE**

(56) References cited :
FR-A- 2 268 223
JP-A- 6 179 636
JP-A- 6 371 341
JP-A-61 242 835
US-A- 3 486 655
US-A- 3 917 352

(73) Proprietor : **DSM N.V.**
**Het Overloon 1**
**NL-6411 TE Heerlen (NL)**

(72) Inventor : **Pfletschinger, Elmar**
**Via Prudenziana 10**
**Como (IT)**
Inventor : **Wilkinson, Paul**
**Via Pola 21**
**Como (IT)**

(74) Representative : **Hoogstraten, Willem Cornelis**
**Roeland et al**
**OCTROOIBUREAU DSM Postbus 9**
**NL-6160 MA Geleen (NL)**

EP 0 327 173 B1

## Description

The invention relates to a process for the manufacturing of a wheel of a laminate structure, comprising winding virtually continuous fibers around a mandrel with a polar winding machine, partially (near) crosswinding and partially (near) circumferential winding and curing a thermosetting resin by which the fibres were impregnated.

The wheels for automotive industry are generally made from steel. Apparently a need for fibre reinforced non-metal wheels exist. These wheels are handmade by impregnating carbon-cloth. This is a very labourous and costly process, in which the fibres are not oriented in an optimal way. In NTIS Technical Notes No. 8, August 1985, part F, Filing Code 71F082, Springfield, Virginia US, a process for the manufacturing of wheels is described. Such wheels however, as shown in the Figure of that Note, have a simple form, because it is difficult to wind fibres close to a irregular mould. According to the patent abstract of Japan, vol. 9, No. 77 (M-769) C1800J of 6 April 1985 and the abstract of JP-A-59206021 it is known to make a continuous fibre-reinforced RIM, which uses a plastic outer mould to press fibres to an irregular inner mould surface. This gives rise to strained fibres and it is difficult to press fibres completely in edges.

The invention solves these problems.

The process for the manufacturing of a wheel of a laminate structure according to the invention, is characterised in that the fibres are wound on a mandrel that consists of at least two parts, the two parts are separated by a certain distance, and in that the winding is performed in such a way that the crosswinding takes place first, whereas the circumferential winding takes place last, while during the latter type of winding the gap between the mould parts is closed.

The fibres are preferably wound in such a way that in the part of the wheel that in use will be in a vertical position the fibres are (near) radially wound and thus in an optimum position to enforce their strength. More specifically, they can be wound somewhat like spokes of a bicycles wheel. More preferably, the fibres are wound in such a way, that holes are left open and hence that aeration or bolts-holes can be made without destroying fibre reinforcements. The part of the wheel that will be in a horizontal position is strongest in case the fibres are wound (near) circumferentially.

From an economic point of view it is preferred to make two or more wheels at once.

When making two wheels, two inner mould halves -separated by 1-2 cm-are put on a horizontal axis. First the polar winding machine winds radially over the complete two halves. Then in a second stage, the horizontal part is wound in a circumferential manner. Now room between the radially wound fibres and the mandrel is closed by the circumferentially wound fibres, and so the gap between the two mould halves is closed too. If desired, two more inner mould parts can be put against the first two mould parts, and some more winding can take place.

Preferably, the winding and the closing of the gap between the two mould halves takes place while using a computer for guiding the speed of winding, for making a precise winding pattern and for determining the speed and timing of the closing of the gap.

When the winding is finished, the outer mould halves can be placed and the fibres can be impregnated by a thermosetting resin, and the resin can be cured. Preferably, the fibres are impregnated by vacuum resin transfer moulding. In the last stage, the two wheels have to be demoulded and divided.

As fibre reinforcing materials glass fibres, carbon fibres, Kevlar and other fibres, or mixtures thereof can be used.

As thermosetting resin, unsaturated polyester, vinylesterurethane, epoxy and other resins can be used.

The invention will be further elucidated by the examples, without being limited thereto.

## Example

Two inner mould halves (1) and (1') as shown in Fig. 1 were put on an axis (2) separated by 2 cm. With a polar winding machine glass fibres (4) were radially wound as shown in Fig. 2. The winding machine was computer guided in order to get a pattern, schematically shown in Fig. 3. Between the fibres (4) room was left for holes (5). After the radial winding, circumferential winding was started. By pulling fibres (6) and computer guiding of the closing of gap (3), all fibres were pressed against the mandrel (1) and (1'). After finishing, mould parts (7) were put on the axis (2) with gap between them (only gap (8) shown in Fig 5), and winding started again.

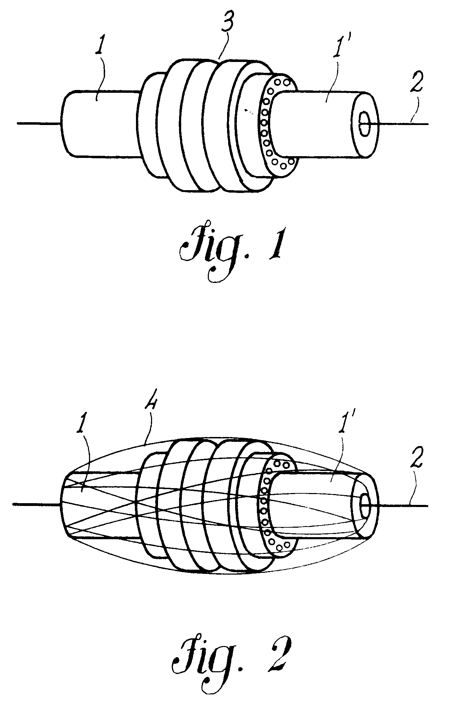

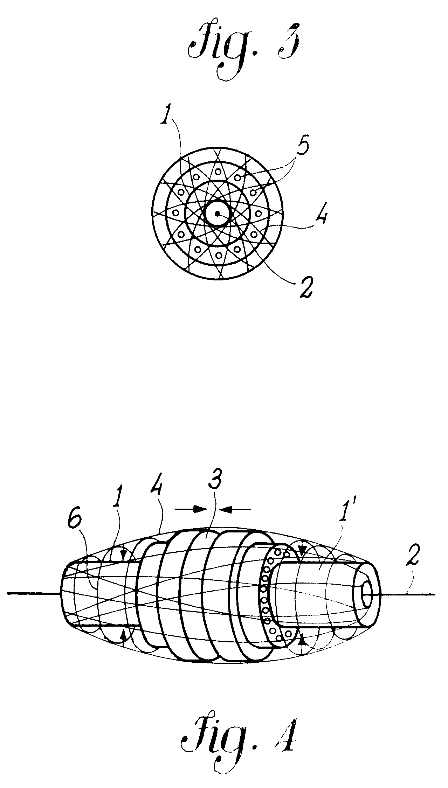

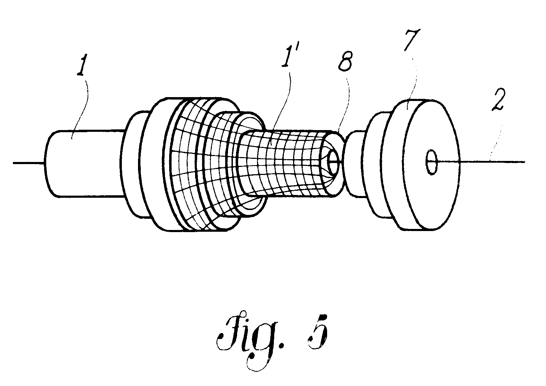

The outward mould half was placed around the inner mould half and by vacuum resin transfer moulding an unsaturated polyester resin prepared from 14.6 parts by weight maleic acid anhydride, 24.7 parts by weight of isophthalic acid and 23.8 parts by weight of propyleneglycol in 36.7 parts by weight styrene was brought into the mould. The curing took place at 60°C for 10 min.

After de-moulding the double wheel was cut in two and the wheel was deflashed.

## Claims

1. Process for the manufacturing of a wheel of a laminate, comprising winding virtually continuous fibres around a mandrel with a polar winding machine, partially near crosswinding and partially near-circumferential winding and curing a thermosetting resin by which the fibres were impregnated, characterized in that the fibres are wound on a mandrel that consists of at least two parts (1,1') the two parts are separated by a certain distance (3) and that the winding is performed in such a way, that the cross-winding takes place first, whereas the circumferential-winding takes place last, while during the latter type of winding the gap (3) between the mould parts is closed.

2. Process according to claim 1, characterized in that prior to the circumferential winding of the fibres, fibres are wound in cross-plies.

3. Process according to any one of claims 1-2, characterized in that the radially wound fibres are wound in such a way, that room is left for holes in the wheel.

4. Process according to any one of claims 1-3, characterized in that the fibre reinforcement consists of glass fibre, carbon fibre or mixtures thereof.

5. Process according to any one of claims 1-4, characterized in that the thermosetting resin is an unsaturated polyester, vinyl ester urethane, or epoxy resin.

6. Process according to any one of claims 1-5, characterized in that the fibres are impregnated by resin with a vacuum resin transfer moulding technique.


**Patentansprüche**

1. Verfahren zur Herstellung eines Rades aus einem Laminat, bei welchem Verfahren im wesentlichen endlose Fasern mit einer Polar-Wickelmaschine um einen Dorn gewickelt werden, teilweise annähernd in Kreuzwicklung und teilweise annähernd in Umfangswicklung, und ein thermoerhärtendes Harz, mit dem die Fasern imprägniert worden sind, ausgehärtet wird, dadurch gekennzeichnet, daß die Fasern auf einen Dorn gewickelt werden, der aus mindestens zwei Teilen (1, 1') besteht, welche beiden Teile durch einen gewissen Abstand (3) getrennt sind, und daß das Wickeln solcherart ausgeführt wird, daß die Kreuzwicklung zuerst stattfindet, während die Umfangswicklung zuletzt stattfindet, und während der letzteren Wicklungsart der Spalt (3) zwischen den Formteilen geschlossen wird.

2. Verfahren nach Anspruch 1, dadurch gekennzeichnet, daß vor der Umfangswicklung der Fasern Fasern diagonal gewickelt werden.

3. Verfahren nach einem der Ansprüche 1-2, dadurch gekennzeichnet, daß die radial gewickelten Fasern solcherart gewickelt werden, daß für Löcher im Rad Platz gelassen wird.

4. Verfahren nach einem der Ansprüche 1-3, dadurch gekennzeichnet, daß die Faserverstärkung aus Glasfasern, Kohlenstoffasern oder Mischungen hievon besteht.

5. Verfahren nach einem der Ansprüche 1-4, dadurch gekennzeichnet, daß das thermoerhärtende Harz ein ungesättigter Polyester, Vinylesterurethan oder Epoxyharz ist.

6. Verfahren nach einem der Ansprüche 1-5, dadurch gekennzeichnet, daß die Fasern mit einer Vakuumharzpreßspritztechnik mit Harz imprägniert werden.


**Revendications**

1. Procédé de fabrication d'une roue à structure stratifiée, comportant le fait de bobiner des fibres, virtuellement continues, autour d'un mandrin au moyen d'une machine pour bobinage polaire, partiellement en bobinage presque transversal et en bobinage presque circonférentiel, et à faire prendre une résine thermodurcissable dont on a imprégné les fibres, procédé caractérisé par le fait que l'on bobine les fibres sur un mandrin constitué d'au moins deux parties (1,1'), par le fait que les deux parties sont séparées par une certaine distance (3) et par le fait que l'on effectue le bobinage de façon que ce soit le bobinage transversal qui se fasse d'abord, tandis que le bobinage circonférentiel se fait en dernier, étant précisé qu'au cours de ce dernier type de bobinage, le jeu (3) existant entre les parties du moule se ferme.

2. Procédé selon la revendication 1, caractérisé par le fait qu'avant le bobinage circonférentiel des fibres, on bobine les fibres en épaisseurs transversales.

3. Procédé selon l'une quelconque des revendications 1-2, caractérisé par le fait que l'on bobine les fibres bobinées radialement de façon à laisser de la place pour des trous dans la roue.

4. Procédé selon l'une quelconque des revendications 1-3, caractérisée par le fait que les fibres d'armature sont constituées de fibres de verre, de fibres de carbone ou de leurs mélanges.

5. Procédé selon l'une quelconque des revendications 1-4, caractérisé par le fait que la résine thermodurcissable est un polyester insaturé, un ester vinylique, de l'uréthane ou une résine époxyde.

6. Procédé selon l'une quelconque des revendications 1-5, caractérisé par le fait que l'on imprègne les fibres de résine selon une technique de moulage par transfert de résine sous vide.

*Fig. 1*

*Fig. 2*

4

# Fig. 3

# Fig. 4

*Fig. 5*